Europäisches Patentamt

European Patent Office

Office européen des brevets

(11) Veröffentlichungsnummer: **0 184 617 B1**

(12) **EUROPÄISCHE PATENTSCHRIFT**

(45) Veröffentlichungstag der Patentschrift:
**20.04.88**

(21) Anmeldenummer: **85110954.6**

(22) Anmeldetag: **30.08.85**

(51) Int. Cl.⁴: **F 42 B 13/32**

(54) **Arretierungsmittel für Schwenkleitwerke.**

(30) Priorität: **22.09.84 DE 3434879**

(43) Veröffentlichungstag der Anmeldung:
**18.06.86 Patentblatt 86/25**

(45) Bekanntmachung des Hinweises auf die Patenterteilung:
**20.04.88 Patentblatt 88/16**

(84) Benannte Vertragsstaaten:
**DE FR GB IT**

(56) Entgegenhaltungen:
**DE - A - 3 048 941**
**DE - B - 1 950 638**
**GB - A - 2 077 399**

(73) Patentinhaber: **Rheinmetall GmbH,
Ulmenstrasse 125 Postfach 6609, D-4000 Düsseldorf
(DE)**

(72) Erfinder: **Schwenzer, Michael, An der Piwipp 101,
D-4000 Düsseldorf 30 (DE)**
Erfinder: **Eskam, Armin, Karlstrasse 47,
D-4018 Langenfeld (DE)**
Erfinder: **Simon, Walter, Schwarzer Weg 20,
D-5120 Herzogenrath (DE)**
Erfinder: **Becker, Wilfried, Lewitstrasse 43,
D-4000 Düsseldorf (DE)**

(74) Vertreter: **Behrens, Ralf Holger, Dipl.-Phys., in Firma
Rheinmetall GmbH Ulmenstrasse 125 Postfach 6609,
D-4000 Düsseldorf 1 (DE)**

**Beschreibung**

Die Erfindung betrifft ein verbrennbares hohles Arretierungsmittel eines Schwenkleitwerkes nach dem Oberbegriff des Patentanspruchs 1.

Ein derartiges Arretierungsmittel ist aus der DE-A-30 48 941 bekannt. Das Arretierungsmittel ist als Hülse ausgebildet, welches alle Leitwerkflügel, insbesondere Leitwerkflügel von Granaten, in einer Ruhestellung durch eine mantelförmige Umhüllung sichert. Die Hülse verbrennt während der Schussabgabe und löst dadurch die Arretierung auf, so dass die Leitwerkflügel nach Verlassen des Rohres in ihre Arbeitsstellung in Umfangsrichtung aufschwenken können.

Aufgrund der kalibergleichen und die Leitwerkflügel aussenseitig in umfangs- und geschossaxialer Richtung umhüllenden Anordnung der Hülse, steht der freie Innenraum zwischen den Leitwerkflügeln nicht für die Unterbringung von Treibladungspulver zur Verfügung. Der Raumverlust würde sich noch wesentlich vergrössern, wenn die für den Einsatz von Panzermunition mit hoher Anfangsgeschwindigkeit $v_o$ grösser 800 m/s geeigneten Leitwerke mit in und gegen die Flugrichtung ausschwenkbaren Leitwerkflügeln in Ruhestellung mit einer derartigen Hülse gesichert werden. Dadurch, dass die bekannte Hülse des weiteren in Ruhestellung der Leitwerkflügel zur Überwindung der Flügelrückstellmomente eine bestimmte Wandstärke aufweisen muss, ist aufgrund des grossen zu verbrennenden Hülsenmantels und der einseitig vom Geschossheck her einsetzenden Verbrennung mit einer vergleichsweise langen Hülsenabbrandzeit zu rechnen, so dass eine derartige Leitwerkarretierung nur bei einer entsprechend langen Rohrdurchlaufzeit von beispielsweise eine geringe Anfangsgeschwindigkeit kleiner 600 m/s aufweisenden Spreng- bzw. Mörsergeschossen einsetzbar ist.

Demgegenüber liegt der Erfindung die Aufgabe zugrunde, das aus dem Oberbegriff des Patentanspruchs 1 bekannte Arretierungsmittel derartig zu gestalten, dass eine raumsparende Leitwerkarretierung in Ruhestellung des Leitwerkes entsteht und eine Entsicherung des Leitwerkes während des Abschusses innerhalb der vergleichsweise geringen Rohrdurchlaufzeit von Panzermunition mit einer Anfangsgeschwindigkeit $v_o$ grösser 800 m/s möglich ist sowie der Raum zwischen den Leitwerkflügeln, insbesondere zwischen in oder gegen die Flugrichtung aufschwenkbaren Leitwerkflügeln, für das Treibladungspulver nutzbar ist.

Gelöst wird diese Aufgabe durch die im Patentanspruch 1 angegebene Erfindung. Die Unteransprüche nennen vorteilhafte Ausgestaltungen.

Dadurch, dass das während des Abschusses verbrennbare hohle Arretierungsmittel stabförmig ausgebildet ist, ist eine einfache individuelle Sicherung eines jeden Leitwerkflügels in Ruhestellung möglich. Durch diese Arretierung wird es in vorteilhafter Weise ermöglicht, dass insbesondere bei in oder gegen Flugrichtung aufschwenkbaren Leitwerken die zwischen den Leitwerkflügeln vorhandenen vergleichsweise grossen Räume für die Unterbringung von Treibladungspulver genutzt werden können. Die stabförmige Gestaltung des Arretierungsmittels als Hohlstift gestattet des weiteren bei geringem mechanischen Aufwand eine kostengünstige automatische Fertigung der gesamten Verbindungsstelle.

Dadurch, dass die Mantelfläche des Hohlstiftes eine selbstsichernde Konusfläche als Formschlussmittel wenigstens in einem den Aufnahmebohrungen des Leitwerkflügels oder/und des Leitwerkträgers zugeordneten Längenbereich des Hohlstiftes enthalten kann, ist es möglich, den Hohlstift auf einfache Weise entweder innerhalb des schwenkbeweglichen Leitwerkflügels oder/und innerhalb des Leitwerkträgers zu sichern. Bei einer Anordnung des Arretierungsmittels ausschliesslich innerhalb des Leitwerkträgers wird der Leitwerkflügel aussenseitig in Ruhestellung gesichert, so dass eine Aufnahmebohrung innerhalb des Leitwerkflügels entfallen kann. Auch wenn bei einer Anordnung des Arretierungsmittels innerhalb des Leitwerkflügels eine Aufnahmebohrung notwendig ist, bleibt im ausgeklappten Zustand des Leitwerkflügels der Strömungsverlust durch die einen vergleichsweise kleinen Durchmesser aufweisende Aufnahmebohrung des Arretierungsmittels in vorteilhafter Weise unbedeutend.

Zur Aufnahme nur geringer aus dem Aufklappmoment des Leitwerkflügels resultierender Belastungen ist in Ruhestellung des Leitwerkes das Arretierungsmittel an dem von einem Anlenkzapfen des Leitwerkflügels jeweils abgewandten Ende innerhalb des Leitwerkflügels und/oder innerhalb des Leitwerkträgers angeordnet.

Der stabförmige Hohlstift kann vielgestaltig, beispielsweise rohrähnlich oder buchsenartig ausgebildet sein, so dass sich zur axialen Lagefixierung verbrennbare Haft- oder Klebemittel auf einfache Weise einsetzen lassen.

Der Hohlstift kann des weiteren zur axialen Lagefixierung durch eine federnd in den Hohlstift einrastende selbstsichernde Arretierungskappe gesichert werden.

In besonders vorteilhafter Weise sind die Wandstärke und der Hohlraum des Hohlstiftes derartig aufeinander abgestimmt, dass der Hohlstift bei in Flugrichtung aufklappbaren Leitwerkflügeln den aus dem Aufklappmoment des Leitwerkflügels während des Abschusses resultierenden Belastungen standhält und der Hohlraum bis zum Verlassen der Leitwerkflügel aus dem Rohr durch eine von beiden Stirnseiten eingeleitete Verbrennung eine vollkommene Umsetzung gestattet. Durch diese Abstimmung ist die Abbrandzeit des Hohlstiftes derartig reduzierbar, dass kurze Abbrandzeiten innerhalb der Rohrdurchlaufzeit von Panzermunition mit hoher Anfangsgeschwindigkeit $v_o$ grösser 800 m/s erreicht werden.

Die Erfindung wird anhand der in den Zeichnungen dargestellten Ausführungsbeispiele des näheren erläutert.

Es zeigt:

Fig. 1 in einer Schnittdarstellung eine Leitwerkanordnung, bei der die Leitwerkflügel jeweils in Ruhestellung durch ein innerhalb des Leitwerkflügels angeordnetes Arretierungsmittel gesichert sind;

Fig. 2 in einer Schnittdarstellung eine Leitwerkanordnung, bei der die Leitwerkflügel jeweils in Ruhestellung durch ein ausserhalb des Leitwerkflügels und innerhalb des Leitwerkträgers angeordnetes Arretierungsmittel gesichert sind;

Fig. 3 in einer Schnittdarstellung entlang der in Fig. 2 mit III-III gekennzeichneten Fläche die Anordnung eines durch eine Konusfläche im Leitwerkträger befestigten als Hohlstift ausgebildeten Arretierungsmittels;

Fig. 4 in einer Schnittdarstellung entlang der in Fig. 1 mit IV-IV gekennzeichneten Fläche die Anordnung eines durch eine Konusfläche im Leitwerkträger befestigten Hohlstiftes;

Fig. 5 in einer weiteren Schnittdarstellung entlang der in Fig. 1 mit IV-IV gekennzeichneten Fläche die Anordnung eines durch eine Konusfläche im Leitwerkträger und Leitwerkflügel befestigten Hohlstiftes;

Fig. 6 in einer weiteren Schnittdarstellung entlang der in Fig. 1 mit IV-IV gekennzeichneten Fläche die Anordnung eines auf dem Mantel mit Haft- oder Klebemitteln innerhalb des Leitwerkträger und des Leitwerkflügels gesicherten Hohlstiftes;

Fig. 7 in einem Halbschnitt entlang der in Fig. 1 mit IV-IV gekennzeichneten Fläche die Anordnung eines mit einer Arretierungskappe sicherbaren Hohlstiftes;

Fig. 8 in einem weiteren Halbschnitt entlang der in Fig. 1 mit IV-IV gekennzeichneten Fläche die Anordnung einer in den Hohlstift einklebbaren Arretierungskappe.

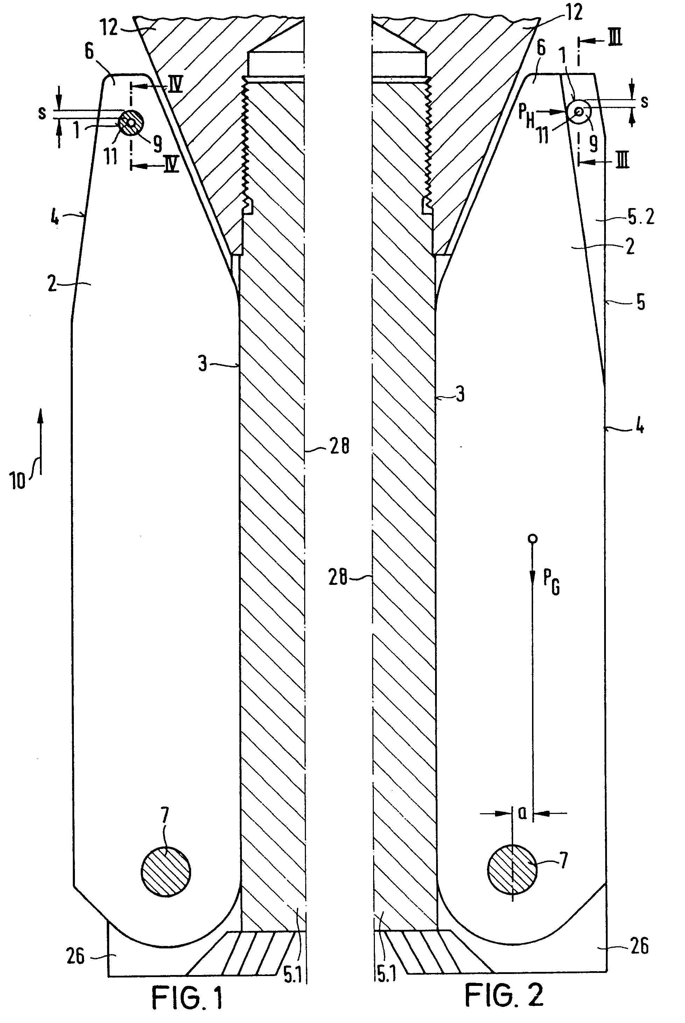

Die Figuren 1 und 2 verdeutlichen verschiedene individuelle Arretierungsmöglichkeiten der an einem Leitwerkträger 5 befestigten Leitwerkflügel 2. Der zentrale Schaft 5.1 des Leitwerkträgers 5 ist heckseitig an einer Panzermunition 12 befestigt und enthält zur Aufnahme und Arretierung der Leitwerkflügel 2 axial verlaufende und radial nach aussen gerichtete unterkalibrige Versteifungen 5.2. In bevorzugten Ausführungsvarianten ist an dem jeweils von der Munition 12 abgewandten Ende 26 jeder Versteifung 5.1 ein quer zur Flugrichtung 10 gelagerter Anlenkzapfen 7 zugeordnet, um den die Leitwerkflügel 2, nach Verlassen eines nicht dargestellten Waffenrohres, selbsttätig durch ein aus der Flügelgewichtskraft $P_G$ x Schwerpunktsabstand a gebildetes Aufklappmoment in eine ausserkalibrige ebenfalls nicht dargestellte Arbeitsstellung aufschwenkbar sind.

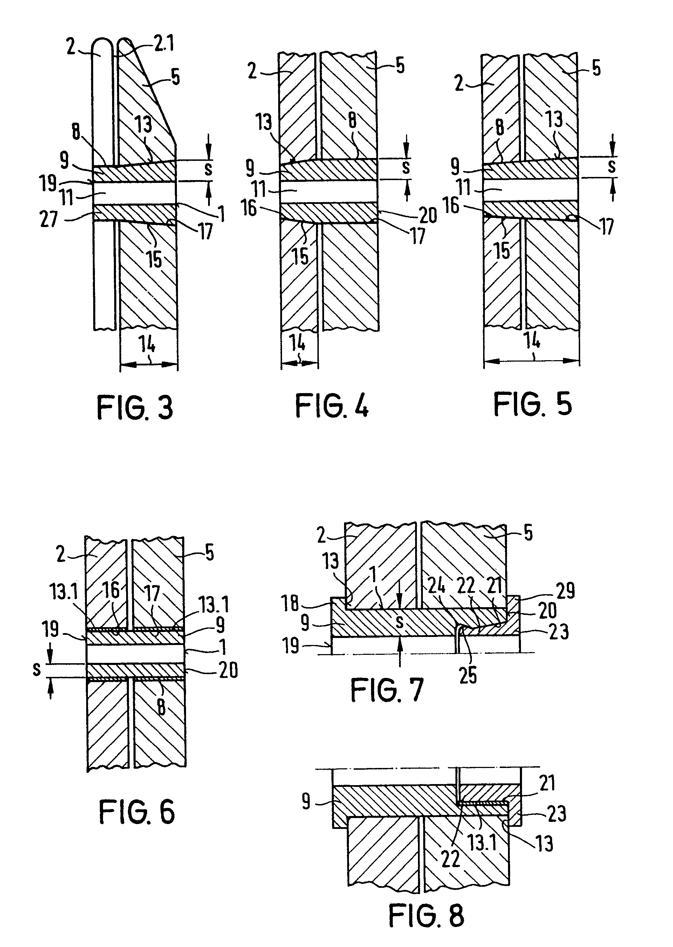

Die Leitwerkflügel 2 befinden sich in einer für den Transport und den Ladevorgang notwendigen eingeschwenkten Ruhestellung 3, in welcher sie innenseitig am Schaft 5.1 und seitlich mit der Breitseite 2.1 (Fig. 3) an der Verstärkung 5.2 anliegen sowie aussenseitig ein unterkalibriges Mass bilden.

Zur Sicherung dieser Ruhestellung 3 enthält das Leitwerk 4 aus bekannten Werkstoffen, vorzugsweise Pol-Pulver (Pulver ohne Lösungsmittel) hergestellte, verbrennbare Arretierungsmittel 1, die jedoch stabförmig ausgebildet und jedem Leitwerkflügel 2 zugeordnet sind, wobei die Arretierungsmittel 1 gemäss Fig. 1 innerhalb des Leitwerkflügels 2 und des Leitwerkträgers 5, vorzugsweise in dessen Verstärkung 5.2 angeordnet sind oder gemäss Fig. 2 nur innerhalb der Verstärkung 5.2 des Leitwerkträgers 5 befestigt sind und dabei durch eine über die Verstärkung hinausreichende Verlängerung 27 (Fig. 3) den jeweiligen Leitwerkflügel 2 sichert.

Die Arretierungsmittel 1 sind zur Sicherung des Leitwerkes 4 in Ruhestellung 3 an dem vom Anlenkzapfen 7 abgewandten Ende 6 angeordnet, wodurch die aus dem Aufklappmoment der Leitwerkflügel 2 resultierenden und auf die Arretierungsmittel 1 wirkenden Haltekräfte $P_H$ erheblich reduziert werden. In Fig. 2 ist das Arretierungsmittel 1 in einem ausserhalb des Leitwerkflügels 2 befindlichen vorzugsweise durch eine Abschrägung der Leitwerkflügel 2 gebildeten Bereich angeordnet.

Zur schnellen Einleitung der Verbrennung ist das stabförmige Arretierungsmittel 1 als Hohlstift 9 entsprechend den Fig. 3 bis 8 ausgebildet, wobei er zu seiner axialen Lagefixierung in bevorzugten Ausführungsformen Formschlussmittel 13 enthält oder durch ein verbrennbares Haft- oder Klebemittel 13.1, beispielsweise Nitrolack (Fig. 6 und 8), gesichert werden kann.

Die Wandstärke s und der Hohlraum 11 des Hohlstiftes 9 sind derartig aufeinander abgestimmt, dass der Hohlstift 9, bei in parallelen Ebenen zur Munitionsachse 28 aufklappbaren Leitwerkflügeln 2, den aus dem Aufklappmoment resultirenden Belastungen standhält und der Hohlraum 11 bis zum Verlassen der Leitwerkflügel 2 aus dem Rohr durch eine von beiden Stirnseiten 19,20 eingeleitete Verbrennung eine vollkommene Umsetzung gestattet. Der Hohlraum 11 enthält vorzugsweise einen kreisförmigen Querschnitt mit einem Mindestdurchmesser von $\geq$ 0,2 mm.

Nach den Figuren 3 bis 5 enthält die Mantelfläche 8 des Hohlstiftes 9 als Formschlussmittel 13 ausgebildete selbstsichernde Konusflächen 15, die je nach der Anordnung des Hohlstiftes 9 und der Wanddicke des Leitwerkflügels 2 verschiedene Lagen einnehmen können.

Gemäss Fig. 3 ist der Hohlstift 9 ausschliesslich in einer Aufnahmebohrung 17 der Verstärkung 5.2 des Leitwerkträgers 5 angeordnet und wird durch die Konusfläche 15 in einem dem Leitwerkträger 5 zugeordneten Längenbereich 14 gesichert, wobei die rohrähnliche Verlängerung 27 den Leitwerkflügel 2 in Ruhestellung 3 in der in Fig. 2 dargestellten Weise sichert.

Gemäss Fig. 4 ist die Mantelfläche 8 des Hohlstiftes 9 nur in einem der Bohrung 16 des Leitwerkflüges 2 entsprechenden Längenbereich 14 als selbstsichernde Konusfläche 15 ausgebildet, wobei der zylindrische Teil der Mantelfläche 8 innerhalb der Bohrung 17 des Leitwerkträgers 5 geführt ist.

In Fig. 5 sind beide Aufnahmebohrungen 16, 17 des Leitwerkflügels 2 und des Leitwerkträgers 5 konisch ausgebildet, so dass die Mantelfläche 8 des Hohlstiftes 9 in einem vergrösserten Längenbereich 14 eine selbstsichernde Konusfläche 15 aufweist.

Eine ausschliesslich zylindrisch ausgeführte Mantelfläche 8 des Hohlstiftes 9 wird nach Fig. 6 innerhalb der Bohrungen 16, 17 auf einfache Weise mit einem verbrennbaren Haft- oder Klebemittel 13.1 gesichert, wobei in nicht dargestellter Weise eine der Fig. 2 entsprechende Sicherung ebenfalls möglich ist.

Gemäss den Figuren 7 und 8 wird der Hohlstift 9 durch beidseitig aussenseitig an den Stirnseiten 19, 20 angeordnete Formschlussmittel 13 gehalten, wobei er durch eine hohle Arretierungskappe 23 lagefixiert wird. Dabei enthält die Stirnseite 19 des Hohlstiftes 9 einen radialen Ansatz 18 und die gegenüberliegende Stirnseite 20 eine Bohrungserweiterung 21, in den zur axialen Fixierung ein Ansatz 22 der Arretierungskappe 23 hineingeschoben wird. Als Formschlussmittel 13 enthält die Arretierungskappe 23 ebenfalls einen radialen Ansatz 29. Gemäss Fig. 7 ist die Bohrungserweiterung 21 nach aussen konisch verlaufend ausgebildet und enthält am innenseitigen Ende eine radiale Hinterdrehung 24, in die in eingeschobener Stellung eine der Form der Hinterdrehung 24 angepasste Wulst 25 des Ansatzes 22 federnd eingerastet ist. Der Ansatz 22 der Arretierungskappe 23 und die Bohrungserweiterung 21 können nach Fig. 8 auch zylindrisch ausgeführt werden, wobei der Ansatz 22 aussenseitig durch die verbrennbaren Haft- und Klebemittel 13.1 lagesicherbar ist.

### Bezugszeichenliste

1 Arretierungsmittel
2 Leitwerkflügel
3 Ruhestellung
4 Leitwerk
5 Leitwerkträger
5.1 Schaft
5.2 Verstärkung
6 Ende
7 Anlenkzapfen
8 Mantelfläche
9 Hohlstift
10 Flugrichtung
11 Hohlraum
12 Munition
13 Formschlussmittel
13.1 Klebemittel
14 Längenbereich
15 Konusfläche
16 Aufnahmebohrung
17 Aufnahmebohrung
18 Ansatz
19 Stirnseite
20 Stirnseite
21 Bohrungserweiterung
22 Ansatz
23 Arretierkappe
24 Hinterdrehung
25 Wulst
26 Ende
27 Verlängerung
28 Achse
29 Ansatz
s Wandstärke
a Schwerpunktsabstand
$P_G$ Flügelgewichtskraft
$P_H$ Haltekraft

### Patentansprüche

1. Verbrennbares hohles Arretierungsmittel eines Schwenkleitwerks, welches letzteres in einer unterkalibrigen Ruhestellung vor dem Aufschwenken sichert und diese Sicherstellung bei der Schussabgabe aufgibt, dadurch gekennzeichnet, dass das Arretierungsmittel (1) stabförmig ausgebildet und jedem Leitwerkflügel (2) zugeordnet ist.

2. Arretierungsmittel nach Anspruch 1, dadurch gekennzeichnet, dass in Ruhestellung (3) des Leitwerks (4) das Arretierungsmittel (1) innerhalb des schwenkbeweglichen Leitwerkflügels (2) und/oder innerhalb des Leitwerkträgers (5) angeordnet ist.

3. Arretierungsmittel nach Anspruch 1, dadurch gekennzeichnet, dass in Ruhestellung (3) des Leitwerks (4) das Arretierungsmittel (1) an dem von einem Anlenkzapfen (7) des Leitwekflügels (2) jeweils abgewandten Ende (6) innerhalb des Leitwerkflügels (2) und/oder innerhalb des Leitwerkträgers (5) angeordnet ist.

4. Arretierungsmittel nach einem der Ansprüche 1 bis 3, gekennzeichnet durch einen Hohlstift (9), der zu seiner Lagefixierung Formschlussmittel (13) enthält.

5. Arretierungsmittel nach einem der Ansprüche 1 bis 3, gekennzeichnet durch einen Hohlstift (9), der zur axialen Lagefixierung durch ein verbrennbares Haft- oder Klebemittel (13.1) gesichert ist.

6. Arretierungsmittel nach einem der Ansprüche 1 bis 4, dadurch gekennzeichnet, dass die Mantelfläche (8) des Hohlstiftes (9) als Formschlussmittel (13) wenigstens in einem den Aufnahmebohrungen (16, 17) des Leitwerkflügels (2) und/oder des Leitwerkträgers (5) zugeordneten Längenbereich (14) des Hohlstiftes (9) als selbstsichernde Konusfläche (15) ausgebildet ist.

7. Arretierungsmittel nach einem der Ansprüche 1 bis 5, gekennzeichnet durch folgende Merkmale:

a) eine Stirnseite (19) des Hohlstiftes (9) enthält einen radialen Ansatz (18) und die gegenüberliegende Stirnseite (20) eine Bohrungserweiterung (21);

b) die Bohrungserweiterung (21) ist derartig ausgebildet, dass zur axialen Fixierung des Hohlstiftes (9) ein in die Bohrungserweiterung (21) hineingeschobener Ansatz (22) einer hohlen Arretierungskappe (23) selbstsichernd fixiert ist.

8. Arretierungsmittel nach Anspruch 7, dadurch gekennzeichnet, dass die Bohrungserweiterung (21) eine radiale Hinterdrehung (24) enthält, in die in eingeschobener Stellung eine der Form der Hinterdrehung (24) angepasste Wulst (25) des Ansatzes (22) federnd eingerastet ist.

9. Arretierungsmittel nach einem der Ansprüche 1 bis 8, dadurch gekennzeichnet, dass die Wandstärke (s) und der Hohlraum (11) des Hohlstiftes (9) derartig aufeinander abgestimmt sind, das der Hohlstift (9) bei in parallelen Ebenen zur Munitionsachse (28) aufklappbaren Leitwerksflügeln (2) den aus dem Aufklappmoment [Flügelgewichtskraft $P_G$ x Schwerpunktsabstand a zum Anlenkzapfen (7)] des Leitwerkflügels (2) während des Abschusses resultierenden Belastungen standhält und der Hohlraum (11) bis zum Verlassen der Leitwerkflügel (2) aus dem Rohr durch eine von beiden Strinseiten (19, 20) eingeleitete Verbrennung eine vollkommene Umsetzung gestattet.

### Claims

1. Combustible hollow retaining means for a deployable tail unit which is secured in a sub-calibre rest position before being pivoted outwardly from the rest position following the firing operation, characterised by the fact that the retaining means (1) is rod shaped and is provided for each blade (2) of the tail unit.

2. Retaining means in accordance with Claim 1, characterised by the fact that when the tail unit (4) is in the position of rest (3) the retaining means (1) is situated inside the pivotable tail unit wing (2) and/or inside the tail unit support (5).

3. Retaining means in accordance with Claim 1, characterised by the fact that when the tail unit (4) is in the position of rest (3) the retaining means (1) is situated inside the tail unit blade (2) and/or inside the tail unit carrier (5) by whichever end (6) is farther away from a pivot (7) of the tail unit blade (2).

4. Retaining means in accordance with one of Claims 1 to 3 characterised by a hollow pin (9) containing mechanical interlock means (13) serving to fix it in position.

5. Retaining means in accordance with any of Claims 1 to 3 characterised by a hollow pin (9) secured by a combustible attachment or adhesion means (13.1) in order to fix it in position in the axial direction.

6. Retaining means in accordance with any one of Claims 1 to 4 characterised by the fact that the outer surface (8) of the hollow pin (9) comprises the mechanical interlock (13) and is contructed as a self-locking conical surface (15) at least over a part (14) of the length of the hollow pin (9) which is associated with receiving borings (16, 17) on the wing (2) of the tail unit and/or of the support (5) of the tail unit.

7. Retaining means in accordance with one of Claims 1 to 5 characterised by the following features:

    a) one end (19) contains a radial attachement (18) while the opposite end (20) includes a widened part (21) of a boring;

    b) the widened part (21) of the boring is so constructed that for the purpose of fixing the hollow pin (9) in position in the axial direction an attachment (22) of a hollow locking cap (23) and forced into the widened part (21) of the boring is secured by a self-locking arrangement.

8. Retaining means in accordance with Claim 7 characterised by the fact that the widened part (21) of the boring includes a radial relief (24) into which a beading (25) belonging to the attachment (22) and adapted to the shape of the relief (24) is resiliently secured when the said attachment has been inserted.

9. Retaining means in accordance with any one of Claims 1 to 8 characterised by the fact that the thicknesses of the wall and the hollow space (11) in the hollow pin (9) are adapted to each other in such a manner that the hollow pin (9) when the blades (2) of the tail unit are opened in planes parallel to the axis (28) of the ammunition, resists the stresses during the firing resulting from the opening-up moment [force due to mass of blade $P_G$ x distance a, of centre of gravity from the pivot (7)] of the tail unit wing (2), while the hollow space (11), up to the emergence of the tail unit 2 from the barrel, enables complete reaction to take place as a result of a combustion initiated from both ends (19, 20).

**Revendications**

1. Organe de blocage creux combustible d'un empennage pivotant, ce dernier étant bloqué dans une position de repos sous-calibrée avant de se déployer et abandonnant cette position de blocage lors du tir, caractérisé en ce que l'organe de blocage (1) est conformé en burreau et correspond à chaque ailette d'empennage (2).

2. Organe de blocage selon la revendication 1, caractérisé en ce que, dans la position de repos (3) de l'empennage (4), l'organe de blocage (1) est placé à l'intérieur de l'ailette d'empennage pivotante (2) et/ou à l'intérieur du longeron d'empennage (5).

3. Organe de blocage selon la revendication 1, caractérisé en ce que, dans la position de repos (3) de l'empennage (4), l'organe de blocage (1) est placé à l'extrémité (6) respectivement opposée à un pivot d'articulation (7) de l'ailette (2) à l'intérieur de celle-ci et/ou à l'interieur du longeron (5).

4. Organe de blocage selon l'une des revendications 1 à 3, caractérisé par une broche creuse (9) qui comprend des moyens d'accouplement par concordance de forme (13) pour sa fixation en position.

5. Organe de blocage selon l'une des revendications 1 à 3, caractérisé par une broche creuse (9) qui est bloquée, pour sa fixation en position axiale, par un adhésif ou une colle (13.1) combustible.

6. Organe de blocage selon l'une des revendications 1 à 4, caractérisé en ce que la surface latérale (8) de la broche creuse (9) est conformée en surface conique autoblocante (15), pour consituter des moyens d'accouplement par concordance de forme (13), au moins dans une zone de longuer (14) de la broche creuse (9) correpondant aux alésages de réception (16, 17) de l'ailette (2) et/ou du longeron (5).

7. Organe de blocage selon l'une des revendications 1 à 5, caractérisé par les caractéristiques suivantes:

    a) une face frontale (19) de la broche creuse (9) comprend un appendice radial (18) et la face frontale opposée (20) un agrandissement d'alésage (21);

    b) l'angrandissement d'alésage (21) est conformé de façon que, pour la fixation axiale de la broche creuse (9) une garniture (22) d'un chapeau de blocage creux (23), introduit dans l'agrandissement d'alésage (21), est fixé avec autoblocage.

8. Organe de blocage selon la revendication 7, caractérisé en ce que l'agrandissement d'alésage (21) compred une contre-dépouille radiale (24) dans laquelle, en position rétractée, un renflement (25) de la garniture (22), adapté à la forme de la contre-dépouille (24), s'encliquette élastiquement.

9. Organe de blocage selon l'une des revendications 1 à 8, caractérisé en ce que l'épaisseur de paroie (s) et la cavité (11) de la broche creuse (9) sont ajustées mutuellement de façon que la broche creuse (9) résiste, dans le cas d'ailettes (2) redressables dans des plans parallèles à l'axe (28) de la munition, aux charges résultant du moment de redressement [poids de l'ailette PG x distance a du centre de gravité au pivot d'articulation (7)] de l'ailette (2) et que la cavité (11) permette, jusqu'à ce que les ailettes d'empennage (2) aient quitté le tube, une transformations complète par une combustion déclenchée par les deux faces frontales (19, 20).

FIG. 1

FIG. 2

FIG. 3

FIG. 4

FIG. 5

FIG. 6

FIG. 7

FIG. 8